Europäisches Patentamt

European Patent Office

Office européen des brevets

(11) Veröffentlichungsnummer: **0 317 820 B1**

## EUROPÄISCHE PATENTSCHRIFT

(45) Veröffentlichungstag der Patentschrift: **15.07.92**

(21) Anmeldenummer: **88118589.6**

(22) Anmeldetag: **08.11.88**

(51) Int. Cl.⁵: **C08K 3/04**, C08L 81/02

(54) Verfahren zur Stabilisierung von Polyphenylensulfid gegen thermischen Abbau und Ausgasungen organischer Substanzen.

(30) Priorität: **27.11.87 DE 3740379**

(43) Veröffentlichungstag der Anmeldung:
**31.05.89 Patentblatt 89/22**

(45) Bekanntmachung des Hinweises auf die Patenterteilung:
**15.07.92 Patentblatt 92/29**

(84) Benannte Vertragsstaaten:
**AT BE CH DE FR GB IT LI LU NL SE**

(56) Entgegenhaltungen:
**EP-A- 0 070 010**
**US-A- 4 476 265**

**CHEMICAL ABSTRACTS, Band 100, Nr. 14, 2. April 1984, Seite 43, Zusammenfassung Nr. 104491k, Columbus, Ohio, US; & JP-A-58 152 051 (SUMITOMO ELECTRIC INDUSTRIES LTD) 09-09-1983**

(73) Patentinhaber: **SIEMENS AKTIENGESELL-SCHAFT**
**Wittelsbacherplatz 2**
**W-8000 München 2(DE)**

(72) Erfinder: **Schmidt, Hans-Friedrich, Dr.**
**Graf-Tattenbach-Weg 3b**
**W-8196 Eurasburg(DE)**
Erfinder: **Ouella, Ferdinand, Dr.**
**Cramer-Klett-Strasse 2**
**W-8014 Neubiberg(DE)**

## Beschreibung

Die Erfindung betrifft ein Verfahren zur Stabilisierung von zum Beispiel als Gehäusematerial für elektrische Bauteile und Reflektoren verwendbarem Polyphenylensulfid (PPS) gegen thermischen Abbau und Ausgasungen organischer Substanzen.

PPS gibt bei Wärmebeanspruchung schwefelhaltige korrosive Gase ab, die den Einsatz dieses Werkstoffes in der Elektrotechnik einschränken.

PPS verschiedener Anbieter wird mit Lithiumcarbonat bis ca. 5% Massenanteil versetzt, um eine Absorption schwefelhaltiger Ausgasungen zu erreichen. Diese Ausgasungen wirken noch bis weit unter 200°C - also bis in den Einsatztemperaturbereich von PPS - korrosiv (F. Quella, Kunststoffe 71 (1981) Heft 6, Seite 389) gegenüber Metallen. Die Gase bestehen unter anderem aus $H_2S$, $SO_2$ und Thiophenol. Das üblicherweise vom Lieferanten zugesetzte Lithiumcarbonat absorbiert diese Gase erst oberhalb des Verarbeitungstemperaturbereiches von maximal 370°C.

Eine Reihe von wirksamen Stabilisatoren wurde getestet und in der DE OS 32 09 525 beschrieben.

Da diese Substanzen in den Abbaumechanismus eingreifen, können sie nur den Abbau selbst verhindern. Im Einsatz für spezielle gekapselte Relais gasen diese Werkstoffe jedoch die herstellungsbedingten zum Teil chlorhaltigen, niedermolekularen Anteile aus, die dann im Schaltfunken zu widerstandserhöhenden Belägen (sog. "Brown Powder"-Bildung) bzw. bei Verbrennung von niedermolekularem PPS im Schaltfunken von Relais zu Korrosion führen können. Ein anderer Grund für die Ausgasungen sind einige Additive, zum Beispiel Polyethylen, als Fließhilfe, die zwar nicht korrosiv sind, aber zu Belägen führen können. Auch wenn solche Ausgasungen nur in geringer Menge auftreten, kann sich in einem Relais mit einer Dauereinsatztemperatur von 100 oder 125°C bereits eine meßbare Widerstandserhöhung einstellen.

Der Erfindung liegt die Aufgabe zugrunde, ein Verfahren der eingangs definierten Form zu konzipieren. Ein geeigneter Absorber für die schwefelhaltigen Gase muß folgende Forderungen erfüllen:
- er muß thermisch etwa genauso stabil sein wie PPS,
- er muß etwa in demselben Temperaturbereich verarbeitbar sein,
- er muß Akzeptorgruppen für die schwefelhaltigen Gase besitzen,
- er muß sich mit PPS gut mischen und
- der Zusatz muß noch wirtschaftlich sein.

Diese Aufgabe wird gemäß dem Kennzeichen des Anspruchs 1 gelöst. Vorteilhafte Ausführungsformen und Weiterbildungen der Erfindung sind in den weiteren Unteransprüchen enthalten.

Es hat sich gezeigt, daß die Ausgasungen im Bereich der Einsatztemperatur bis ca. 125°C durch Zusatz von Aktivkohlepulver praktisch auf Null reduziert werden können. Dieses Ergebnis ist insofern überraschend, weil das PPS bei der Verarbeitung über 300°C erhitzt wird und die Aktivkohle trotzdem noch wirksam bleibt. Nach $10^6$ Schaltspielen im abgeschlossenen Volumen bei 100°C ergibt sich noch keine Kontakt-Widerstandserhöhung, während andere handelsübliche PPS-Werkstoffe längst zu erhöhten Kontakt-Widerständen geführt haben.

Die Erklärung liegt darin, daß die Ausgasungen bei der Verarbeitung noch so gering sind, daß sich in der Aktivkohle noch keine Ablagerungen bilden können, die die Wirksamkeit beeinträchtigen, oder gar Gase absorbiert und wieder abgegeben werden. Es ist dabei kein Widerspruch, daß die Wirksamkeit der Aktivkohle zwischen 100 ..150°C endet.

Durch den niedrigen Preis der Aktivkohle ergibt sich damit eine sehr kostengünstige Stabilisierungsmöglichkeit. Ab einer Konzentration von 3..5% Aktivkohle wird allerdings die Leitfähigkeit des Werkstoffes < $10^{-9}S$, so daß man, wenn dieser Effekt nicht eintreten soll, zwischen 1..2% Zusatz bleiben muß.

Durch die Aktivkohlezugabe lassen sich die bei normalen PPS üblichen Korrosionserscheinungen im Spritzgießwerkzeug nicht reduzieren.

Es bietet sich daher unter anderem als ideale Stabilisatormischung an, einen der Stabilisatoren aus der DE-OS 32 09 525 in Kombination mit einer Aktivkohlezugabe bis 5% zu verwenden. Ein Stabilisatorsystem kann z. B. zu 1..2% aus dem Werkstoff Polyetheretherketon (PEEK) bestehen und zu ca. 2% aus Aktivkohle. Die mechanischen Eigenschaften des PPS bleiben dadurch weitgehend unverändert. Die Mischung wird z. B. in einem Zweiwellenkneter hergestellt.

Um eine möglichst effektive Stabilisierung zu erreichen, wird man die Obergrenzen an Stabilisator entsprechend DE-OS 32 09 525 bei ca. 5 % ansetzen und bei der Aktivkohle ebenfalls bei 5%.

Beide Obergrenzen ergeben sich aus der Tatsache, daß die Aktivkohle oberhalb von 100°C immer weniger wirkt und man an die Grenzwerte herangeht, die vom mechanischen Standpunkt gerade noch vertretbar sind, um das niedrigste Niveau an Ausgasungen einstellen zu können.

Wie vorher bereits erwähnt beginnt die Wirksamkeit des üblicherweise verwendeten Stabilisators Lithiumcarbonat erst bei ca. 370°C; er verhindert die Schneckenkorrosion in der Spritzgießmaschine. Im allgemeinen bleibt man bei der PPS-Verarbeitung bei 330 ... 350°C. Sollte man mit der Verarbeitungstemperatur aber einmal höher gehen müssen, kann auch dieser Stabilisator noch zugesetzt sein (zum Beispiel 1 % $Li_2CO_3$). Gibt man

also alle drei Stabilisatoren zu, erzielt man einen lückenlosen Schutz gegen Ausgasungen von Raumtemperatur bis ca. 400°C.

**Patentansprüche**

1. Verfahren zur Stabilisierung von zum Beispiel als Gehäusematerial für elektrische Bauteile verwendbarem Polyphenylensulfid (PPS) gegen thermischen Abbau und Ausgasungen organischer Substanzen, dadurch **gekennzeichnet,** daß dem PPS als Stabilisator Aktivkohlepulver zugesetzt wird.

2. Verfahren nach Anspruch 1, dadurch **gekennzeichnet,** daß der Zusatz 1 .. 2% beträgt.

3. Verfahren nach Anspruch 1, dadurch **gekennzeichnet,** daß man als Stabilisator dem PPS ein thermisch etwa gleich stabiles Polymer zusetzt, wobei dieses Polymer Ketogruppen enthält oder ein Polyimid ist, in Kombination mit einer Aktivkohlezugabe bis 5%.

4. Verfahren nach Anspruch 1, dadurch **gekennzeichnet,** daß man als Polymer mit Ketogruppen ein aromatisches Keton in einer Konzentration bis 5% Massenanteil in Kombination mit ca. 2% Aktivkohle zusetzt.

5. Verfahren nach Anspruch 1, dadurch **gekennzeichnet,** daß man als Polymer mit Ketogruppen ein aromatisches Keton in einer Konzentration bis 1% Massenanteil in Kombination mit ca. 2% Aktivkohle zusetzt.

6. Verfahren nach Anspruch 4, dadurch **gekennzeichnet,** daß man als Polymer mit Ketogruppen Poly-1,4-oxyphenyloxy-p, p′benzophenon in einer Konzentration bis 5% Massenanteil in Kombination mit ca. 2% Aktivkohle zusetzt.

7. Verfahren nach Anspruch 1, dadurch **gekennzeichnet,** daß man als Polymer mit Ketogruppen Poly-1,4-oxyphenyloxy-p, p′-benzophenon in einer Konzentration bis 1% Massenanteil in Kombination mit ca. 2% Aktivkohle zumischt.

8. Verfahren gemäß Anspruch 1, dadurch **gekennzeichnet,** daß kondensationsfähige, resonanzfähige aromatische Ketone oder Imide in Form von Oligomeren entweder den Ausgangsstoffen oder während des Röstprozesses zugemischt werden und anschließend in der Polymerkette als Copolymer eingebaut sind und erst danach Aktivkohlepulver zugesetzt wird.

9. Verfahren nach Anspruch 1, dadurch **gekennzeichnet,** daß dem PPS ein thermisch etwa gleich stabiles Polymer mit aromatischen Amingruppen, insbesondere Polyvinylcarbazol, in einer Konzentration bis ca. 5% in Kombination mit ca. 2% Aktivkohle zusetzt.

10. Verfahren nach den Ansprüchen 1 bis 9, dadurch **gekennzeichnet,** daß zusätzlich dem PPS noch ein Alkalicarbonat, vorzugsweise Lithiumcarbonat, in einer Konzentration von ca. 1 % zugesetzt wird.

**Claims**

1. Process for the stabilisation of polyphenylene sulphide (PPS), which can be used, for example, as housing material for electrical components, against degradation and emissions of organic substances, characterised in that active carbon powder is added to the PPS as stabiliser.

2. Process according to Claim 1, characterised in that the addition is 1 .. 2%.

3. Process according to Claim 1, characterised in that a thermally approximately equally stable polymer is added as stabiliser, said polymer containing keto groups or being a polyimide, in combination with an active carbon addition of up to 5%.

4. Process according to Claim 1, characterised in that an aromatic ketone is added as polymer containing keto groups in a concentration of up to 5% by mass in combination with approximately 2% of active carbon.

5. Process according to Claim 1, characterised in that an aromatic ketone is added as polymer containing keto groups in a concentration of up to 1% by mass in combination with approximately 2% of active carbon.

6. Process according to Claim 4, characterised in that poly(1,4-oxyphenyloxy-p, p'-benzophenone) is added as polymer containing keto groups in a concentration of up to 5% by mass in combination with approximately 2% of active carbon.

7. Process according to Claim 1, characterised in that poly(1,4-oxyphenyloxy-p, p'-benzophenone) is added as polymer containing keto groups in a concentration of up to 1% by mass in combination with approximately 2% of active carbon.

8. Process according to Claim 1, characterised in that condensible aromatic ketones or imides capable of resonance are added in the form of oligomers either to the starting substances or during the calcining process and are then incorporated in the polymer chain as copolymer, and active carbon powder is only added thereafter.

9. Process according to Claim 1, characterised in that a thermally approximately equally stable polymer containing aromatic amine groups, in particular polyvinylcarbazole, is added to the PPS in a concentration of up to approximately 5% in combination with approximately 2% of active carbon.

10. Process according to Claims 1 to 9, characterised in that an alkali-metal carbonate, preferably lithium carbonate is furthermore additionally added to the PPS in a concentration of approximately 1%.

**Revendications**

1. Procédé de stabilisation de poly(sulfure de phénylène) (PPS), utilisable par exemple comme matériau de boîtier de composants électriques, vis-à-vis de la décomposition thermique et de l'émission de substances organiques sous forme de gaz, caractérisé en ce qu'il consiste à ajouter au PPS de la poudre de charbon actif comme stabilisant.

2. Procédé suivant la revendication 1, caractérisé en ce que l'addition représente 1 .. 2 %.

3. Procédé suivant la revendication 1, caractérisé en ce qu'il consiste à ajouter comme stabilisant au PPS un polymère ayant thermiquement à peu près la même stabilité, ce polymère contenant des groupes céto ou étant un polyimide, en association avec une addition de charbon actif allant jusqu'à 5 %.

4. Procédé suivant la revendication 1, caractérisé en ce qu'il consiste à ajouter, comme polymère ayant des groupes céto, une cétone aromatique en une concentration représentant une proportion en poids allant jusqu'à 5 %, en association avec 2 % environ de charbon actif.

5. Procédé suivant la revendication 1, caractérisé en ce qu'il consiste à ajouter, comme polymère ayant des groupes céto, une cétone aromatique en une concentration représentant une proportion en poids allant jusqu'à 1 5, en association avec 2 % environ de charbon actif.

6. Procédé suivant la revendication 4, caractérisé en ce qu'il consiste à ajouter, comme polymère ayant des groupes céto, de la poly-1,4-oxyphényloxy-p, p'benzophénone en une concentration représentant une proportion en poids allant jusqu'à 5 %, en association avec 2 % en poids de charbon actif.

7. Procédé suivant la revendication 1, caractérisé en ce qu'il consiste à ajouter, comme polymère ayant des groupes céto, de la poly-1,4-oxyphényloxy-p, p'-benzophénone en une concentration représentant une proportion en poids allant jusqu'à 1 %, en association avec 2 % environ de charbon actif.

8. Procédé suivant la revendication 1, caractérisé en ce qu'il consiste à ajouter des cétones ou des imides aromatiques susceptibles de subir une condensation et susceptibles de résonance, sous la forme d'oligomères, l'addition s'effectuant aux matières de départ ou pendant le processus de grillage et à les insérer ensuite dans la chaîne polymère en tant que copolymère et à n'ajouter qu'ensuite de la poudre de charbon actif.

9. Procédé suivant la revendication 1, caractérisé en ce qu'il consiste à ajouter au PPS un polymère qui est thermiquement à peu près aussi stable et qui a des groupes amines aromatiques, notamment un polyvinylcarbazol, en une concentration allant jusqu'à 5 % environ, en association avec 2 % environ de charbon actif.

10. Procédé suivant l'une des revendications 1 à 9, caractérisé en ce qu'il consiste à ajouter en plus au PPS un carbonate de métal alcalin, de préférence du carbonate de lithium en une concentration de 1 % environ.